# EUROPEAN PATENT APPLICATION

(11) **EP 2 325 583 A1**
(43) Date of publication of application: **25.05.2011**
(21) Application number: 09804683.2
(22) Date of filing: 28.07.2009
(51) Int. Cl.: F25D 11/02, F25D 17/08, F25D 19/00

(54) **REFRIGERATOR**

(30) Priority: 05.08.2008 JP 2008201536; 05.08.2008 JP 2008201537
(71) Applicant: Panasonic Corporation, Kadoma-shi Osaka 571-8501 (JP)
(72) Inventor: ISHIKAWA, Fumio c/o Panasonic Corporation, IPROC, Chuo-ku, Osaka-shi, Osaka 540-6207 (JP); TAKASE, Keiichi c/o Panasonic Corporation, IPROC, Chuo-ku, Osaka-shi, Osaka 540-6207 (JP); OHSHIMA, Atsuhiro c/o Panasonic Corporation, IPROC, Chuo-ku, Osaka-shi, Osaka 540-6207 (JP); YUASA, Masashi c/o Panasonic Corporation, IPROC, Chuo-ku, Osaka-shi, Osaka 540-6207 (JP); MORIUCHI, Toshiyuki c/o Panasonic Corporation, IPROC, Chuo-ku, Osaka-shi, Osaka 540-6207 (JP)
(74) Representative: Trösch, Hans-Ludwig
(86) International application number: PCT/JP2009/003551
(87) International publication number: WO 2010/016196

(57) **Abstract**

A refrigerator which includes a storage compartment cooled using the direct cooling method and a storage compartment cooled using the indirect cooling method with less energy consumption is provided.

The refrigerator is a refrigerator (100) including a first cooler (12) and a second cooler (32), and further includes a refrigerating compartment (10) having an opening at a front face and an inside which is cooled by a wall cooled by the first cooler (12); a temperature-switchable compartment (20) having an opening at a front face and an inside which is cooled by circulating cool air cooled by the second cooler (32); and a first door (11) which seals the opening of the refrigerating compartment (10) and the opening of the temperature-switchable compartment (20) in a manner which allows opening and closing.

## Description

### [Technical Field]

The present invention relates to refrigerators, and particularly to a refrigerator including a storage compartment cooled using a direct cooling method and a storage compartment cooled using an indirect cooling method.

### [Background Art]

In a conventional refrigerator, there is a cooling cycle in which refrigerant discharged from a compressor passes through a condenser, a throttle valve, and a cooler (also referred to as an evaporator) to return to the compressor.

There are two methods to cool the inside of a compartment: a direct cooling method and an indirect cooling method. In the direct cooling method, the inside of a compartment is cooled through cooling wall cooled by a cooler. In the indirect cooling method, the inside of a compartment is cooled by circulating air cooled by a cooler (cool air) through the inside of the compartment. Some refrigerators cool the insides of the compartments thereof using both of the two methods.

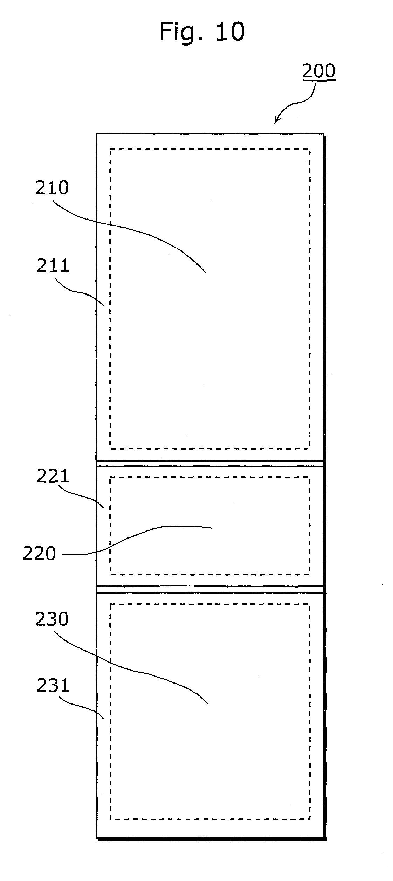

Fig. 10 is a front view of a conventional refrigerator 200.

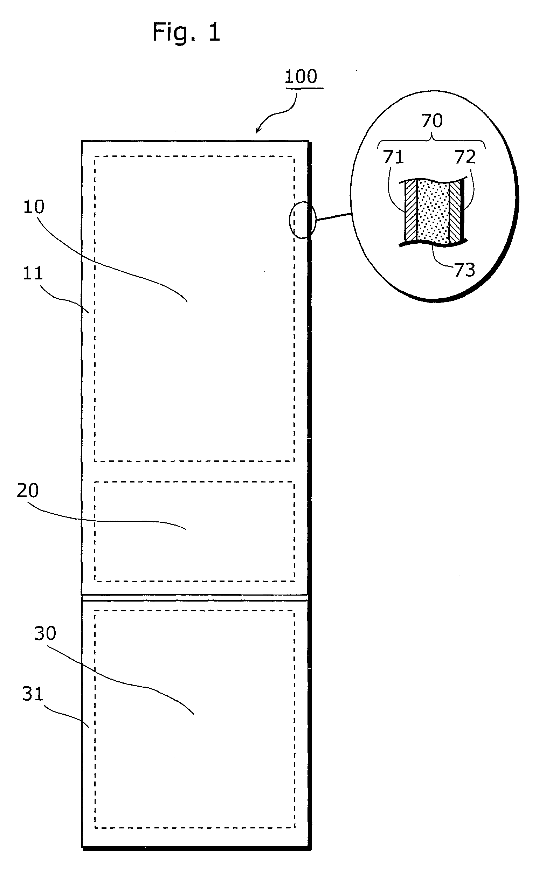

The refrigerator 200 shown in Fig. 10 includes three storage compartments: a refrigerating compartment 210, a temperature-switchable compartment 220, and freezer compartment 230. The rectangles drawn in dashed lines in Fig. 1 indicate openings of the respective storage compartments.

In addition, the refrigerator 200 has three doors which seal the openings of the storage compartments in a manner which allows opening and closing. Specifically, the refrigerator 200 has the door 211 which corresponds to the refrigerating compartment 210, the door 221 which corresponds to the temperature-switchable compartment 220, and the door 231 which corresponds to the freezer compartment 230.

In such a configuration of the refrigerator 200, for example, a back wall of the refrigerating compartment 210 is cooled by an cooler provided on the back surface of the back wall, and the refrigerating compartment 210 is cooled by the cooled back wall. That is, the refrigerating compartment 210 is cooled using the direct cooling method.

On the other hand, cool air circulates from a cooler provided behind a back wall of the freezer compartment 230 through the temperature-switchable compartment 220 and the freezer compartment 230, so that the temperature-switchable compartment 220 and the freezer compartment 230 are cooled. That is, the temperature-switchable compartment 220 and the freezer compartment 230 are cooled using the indirect cooling method.

There are disclosed techniques described for such a refrigerator which has a plurality of storage compartments and doors for the respective storage compartments, and in which both the direct cooling method and the indirect cooling method are used.

For example, there is a disclosed technique in which a refrigerator includes a refrigerating compartment cooled using the direct cooling method, and a temperature-switchable compartment and a freezer compartment cooled using the indirect cooling method, and maintains temperature inside the temperature-switchable compartment through control of the flow rate of cool air flowing from a cooler into the temperature-switchable compartment by controlling opening and closing of a damper (for example, see PTL 1).

Furthermore, there is a disclosed technique in which a refrigerator in a similar configuration includes a damper in a duct which leads from a cooler to a temperature-switchable compartment and the damper adjusts the flow rate of cool air flowing into a temperature-switchable compartment (for example, see PTL 2).

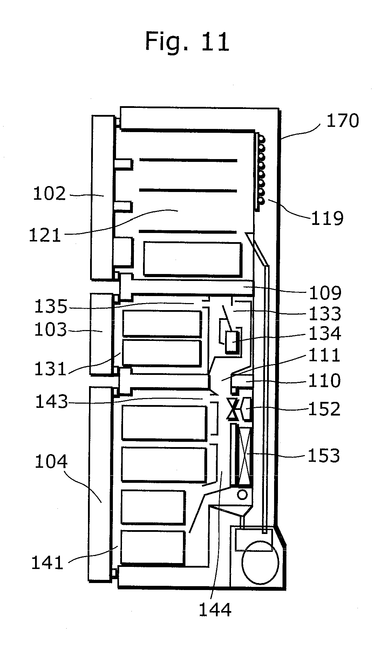

Fig. 11 is a longitudinal sectional view of a conventional refrigerator in which the direct cooling method and the indirect cooling method are used.

The refrigerator shown in Fig. 11 has three storage compartments: a refrigerating compartment 121, a temperature-switchable compartment 131, and a freezer compartment 141. The three storage compartments are defined by dividing a space inside a heat-insulating main body 170 by a divider 109 and a divider 110.

In addition, the refrigerator has a refrigerating-compartment-opening-and-closing door 102, a temperature-switchable-compartment-opening-and-closing door 103, and a freezing-compartment-opening-and-closing 104, which correspond to the respective storage compartments.

Behind an inner case of the refrigerating compartment 121, a tube-on sheet 119 (cooler) is disposed on a back wall of the inner case, and the inside of the refrigerating compartment 121 is cooled by a cool wall surface cooled by the tube-on sheet 119. That is, the inside of the refrigerating compartment 121 is cooled using the direct cooling method.

In addition, a freezer-compartment fan 152 and a cooler 153 are disposed behind the freezer compartment 141. A divider 144 has an outlet 143 through which cool air from a freezer-compartment fan 152 is let out into the freezer compartment 141. In addition, the divider 144 has an air course which leads to a duct 111, and the duct 111 leads to the temperature-switchable compartment 131.

A duct 133 is disposed behind a back wall of the temperature-switchable compartment 131. The duct 133 includes a mechanical damper 134 therein. The duct 133 is connected to the duct 111 disposed in a back portion of the divider 110.
The duct 133 has an outlet 135 which is located downstream of the mechanical damper 134 and lets out cool air into the temperature-switchable compartment 131.

In the refrigerator in this configuration, the freezer-compartment fan 152 circulates evaporative latent heat of the cooler 153 through the temperature-switchable compartment 131, and the mechanical damper 134 detects the temperature inside the temperature-switchable compartment 131 and controls the flow rate of the circulating cool air.

In this configuration, the temperature inside the temperature-switchable compartment 131 is maintained constant. The temperature of food in the temperature-switchable compartment 131 is thereby maintained constant, and thus allowing the food to stay fresh longer.

In addition, there is a disclosed technique in which a refrigerator has a low-temperature compartment disposed below a refrigerating compartment cooled using the direct cooling method. A temperature range of the low-temperature compartment is lower than refrigeration temperature, and the low-temperature compartment is cooled by air coming through an opening provided in a lower part of the refrigerating compartment and communicating with the low-temperature compartment (see PTL 3).

### [Citation List]

### [Patent Literature]

[PTL 1] Japanese Unexamined Patent Application Publication No. 2005-172303
[PTL 2] Japanese Unexamined Patent Application Publication No. 2005-195293
[PTL 3] Japanese Unexamined Patent Application Publication No. 2005-221144

### [Summary of Invention]

### [Technical Problem]

Generally, doors of refrigerators are closed longer than the doors are open. Thus, reducing influence of ambient temperature on temperature inside a refrigerator with doors closed is significant for energy saving of the refrigerator.

Referring to the conventional refrigerators, each of the storage compartments is provided with a door. For example, as shown in Fig. 10 and Fig. 11, the refrigerator having three storage compartments are provided with three doors for the respective storage compartments.

Each of the doors has a seal member referred to as, for example, a gasket or a packing, fitted at a position corresponding to the perimeter of the opening of the storage compartment. The seal member keeps the storage compartment airtight.

Because the seal member isolates cool air in the storage compartment and ambient air around the refrigerator from each other, the amount of heat exchanged between the cool air and the ambient air through the seal member is large compared to the amount of heat exchanged through other parts of the refrigerator.

The amount of heat entering the refrigerator therefore increases in proportion to the total length of the seal member which is longer in the case where each of the storage compartments are provided with a door as shown in Fig. 10 and Fig. 11. In other words, the refrigerator accordingly consumes more energy.

The present invention, conceived to address the problems with the conventional techniques, has an object of providing a refrigerator which has a storage compartment cooled using the direct cooling method and a storage compartment cooled using the indirect cooling method with less energy consumption.

### [Solution to Problem]

In order to solve the problems with the conventional techniques, the refrigerator including a first cooler and a second cooler according to an aspect of the present invention includes: a first storage compartment having an opening at a front face and an inside which is cooled by a wall cooled by the first cooler; a second storage compartment having an opening at a front face and an inside which is cooled by circulating cool air cooled by the second cooler; and a single first door which seals the opening of the first storage compartment and the opening of the second storage compartment in a manner which allows opening and closing.

In this manner, the first storage compartment cooled using the direct cooling method and the second storage compartment cooled using the indirect cooling method of the refrigerator according to an aspect of the present invention are sealed with a single door, that is, the first door in a manner which allows opening and closing.

The seal member which keeps the first storage compartment and the second storage compartment airtight is constantly exposed to ambient air across a shorter length than is the case where each of the storage compartments is provided with a door.

As a result, energy loss due to thermal conduction through the seal member is smaller than in conventional refrigerators.

The present invention thereby provides a refrigerator which consumes less energy than conventional refrigerators.

Furthermore, the second storage compartment may be disposed below the first storage compartment, and the refrigerator may further include a freezer compartment disposed below the second storage compartment and having an opening at a front face and an inside which is cooled by circulating cool air cooled by the second cooler; and a single second door which seals the opening of the freezer compartment in a manner which allows opening and closing.

Here, a temperature range of the freezer compartment is lower than a temperature range of other storage compartments in the refrigerator, and thus temperature in the freezer compartment is greatly different from the ambient temperature in comparison with the other storage compartments. The freezer compartment is provided with the second door, which is separate from the first door, at the opening thereof, so that energy saving in the refrigerator is secured in total.

Furthermore, the first storage compartment and the second storage compartment may be divided by an upper divider, the second storage compartment and the freezer compartment may be divided by a lower divider, the refrigerator may further include a radiator pipe provided in a radiation part of a cooling cycle, extending upward outside one of side walls of the freezer compartment, laterally penetrating the lower divider so as to lie behind a front end face of the lower divider and so as not to run in the upper divider, and extending downward outside an other one of the side walls of the freezer compartment, and the first storage compartment may be a refrigerating compartment and a temperature range of the second storage compartment is higher than a temperature range of the freezer compartment.

In other words, in the refrigerator according to an aspect of the present invention, the front end face of the upper divider which divides the first storage compartment and the second storage compartment from each other is not in contact with ambient air when the door is closed. In addition, the temperature range of the first storage compartment and the second storage compartment is higher than the temperature range of the freezer compartment. The first storage compartment and the second storage compartment do not need to be provided with a radiator pipe for dew condensation prevention, and thus the total length of the radiator pipe is short. In addition, energy loss due to heat radiation from the radiator pipe is reduced.

In addition, the second storage compartment, which is sealed with the first door shared with the first storage compartment in a manner which allows opening and closing, has a temperature range higher than the temperature range of the freezer compartment. A user of the refrigerator is thus allowed to selectively use the storage compartments depending on, for example, characteristics of food to be stored.

Furthermore, the radiator pipe in the lower divider may be disposed at a level closer to the freezer compartment.

In this configuration, dew condensation in upper part the perimeter of the opening of the freezer compartment, which is one of the parts where dew condensation is likely to occur, is effectively prevented.

Furthermore, the front end face of the upper divider may be made of resin.

Although the part has been made of metal such that a gasket including a magnet is in close contact therewith, it is made of resin in this configuration. The front end face of the upper divider conducts less heat, and thus possibility of dew condensation is reduced.

Furthermore, in order to solve the problem with the conventional techniques, the refrigerator including: a heat-insulating main body including an outer case, an inner case, and heat-insulating material provided between the outer case and the inner case; a first cooler; and a second cooler according to an aspect of the present invention includes: a first storage compartment provided inside the heat-insulating main body, and having an opening at a front face and an inside which is cooled by a wall cooled by the first cooler; a second storage compartment provided inside the heat-insulating main body and having an opening at a front face and an inside which is cooled by circulating cool air cooled by the second cooler circulates; a divider which defines the first storage compartment and the second storage compartment by dividing a space inside the heat-insulating main body into an upper space and a lower space; a single door which seals the opening of the first storage compartment and the opening of the second storage compartment in a manner which allows opening and closing; and a divider seal member disposed on a compartment-side surface of the door and laterally extending at a position facing a front end face of the divider so as to block upward and downward airflows in a space between the front end face of the divider and the door.

In this manner, the first storage compartment cooled using the direct cooling method and the second storage compartment cooled using the indirect cooling method of the refrigerator according to an aspect of the present invention are sealed with a single door in a manner which allows opening and closing.

The seal member which keeps the first storage compartment and the second storage compartment airtight, such as a gasket, is constantly exposed to ambient air across a length shorter than is the case where each of the storage compartments is provided with a door.

As a result, energy loss due to thermal conduction through the seal member is smaller than in the conventional refrigerators.

In addition, when the door is closed, the divider seal member, which is disposed on the door, at a position corresponding to the front end face of the divider dividing the first storage compartment and the second storage compartment from each other, blocks upward and downward airflows between the compartment-side surface of the door and the front end face of the divider.

In this configuration, air convection between the opening of the first storage compartment and the opening of the second storage compartment is prevented, and thus power is not wasted when the first storage compartment and the second storage compartment are kept in different temperature ranges.

The present invention thus provides a refrigerator which consumes less energy than conventional refrigerators.

Furthermore, the divider seal member may be disposed on the door, at a position facing the front end face of the divider and closer to the first storage compartment.

In this configuration, the divider seal member is disposed so as to block upward and downward airflows, at a position closer to the first storage compartment than to the second storage compartment. Dew condensation is thereby effectively prevented on the front end face of the divider adjacent to the opening of the first storage compartment, in which humidity tends to be higher than in the second storage compartment.

Furthermore, the divider seal member may be disposed on the door, laterally extend at the position facing the front end face of the divider, and have a tongue which is pressed against the front end face when the door is closed.

In this configuration, the tongue of the divider seal member is pressed against the front end face of the divider so as to cover the front end face of the divider in a relatively large area. Air convection between the opening of the first storage compartment and the opening of the second storage compartment is thereby prevented, and thus dew condensation on the front end face of the divider is effectively prevented.

Furthermore, the refrigerator according to an aspect of the present invention may further include a first gasket which is disposed on a compartment-side surface of the door, at a position corresponding to a perimeter of the opening of the first storage compartment, and keeps the first storage compartment airtight; and a second gasket which is disposed on the compartment-side surface of the door, at a position corresponding to a perimeter of the opening of the second storage compartment, and keeps the second storage compartment airtight, wherein the divider seal member includes a portion of the first gasket and a portion of the second gasket, the portions facing the front end face of the divider.

In this configuration, there is not need for, for example, joining the divider seal member to a separate gasket which keeps the first storage compartment and the second storage compartment airtight, and thus the openings of the first door and the second door are sealed with a single door in a manner which allows opening and closing.

### [Advantageous Effects of Invention]

The present invention provides a refrigerator which includes a storage compartment cooled using the direct cooling method and a storage compartment cooled using the indirect cooling method with less energy consumption.

### [Brief Description of Drawings]

[Fig. 1] Fig. 1 is a front view of a refrigerator according to Embodiment 1 of the present invention.
[Fig. 2] Fig. 2 is a longitudinal sectional view of the refrigerator according to Embodiment 1.
[Fig. 3] Fig. 3 shows a configuration of a seal member attached to a first door according to Embodiment 1.
[Fig. 4] Fig. 4 shows a configuration of a radiator pipe of the refrigerator according to Embodiment 1.
[Fig. 5] Fig. 5 shows that a front end face of an upper divider according to Embodiment 1 is made of resin.
[Fig. 6] Fig. 6 shows a configuration of seal members attached to a first door according to Embodiment 2 of the present invention.
[Fig. 7] Fig. 7 shows an overview of the first door on which two gaskets are disposed correspondingly to a refrigerating compartment and the temperature-switchable compartment according Embodiment 2.
[Fig. 8] Fig. 8 shows an overview of the first door which has a gasket including a magnet disposed at a position facing a front end face of an upper divider according to Embodiment 2.
[Fig. 9] Fig. 9 shows an exemplary configuration of a gasket which does not have a magnet in a portion on the first door according to Embodiment 2.
[Fig. 10] Fig. 10 is a front view of an conventional refrigerator.
[Fig. 11] FIG. 11 is a longitudinal sectional view of a conventional refrigerator in which a direct cooling method and a indirect cooling method are used.

### [Description of Embodiments]

Embodiments of a refrigerator according to the present invention are hereinafter described with reference to figures. It is to be noted that the present invention is not limited to the embodiments.

### [Embodiment 1]

Fig. 1 is a front view of a refrigerator 100 according to Embodiment 1.

As shown in Fig. 1, the refrigerator 100 has two doors and includes a heat-insulating main body 70 divided into three storage compartments therein.

The heat-insulating main body 70 is configured of a heat-insulating wall in which a foam heat-insulating material 73 fills a space between an inner case 71 and an outer case 72. The inner case 71 is a vacuum-formed case made of a resin such as acrylonitrile butadiene styrene (ABS). The outer case 72 is a case made of a metal material such as a precoated steel plate.

The three storage compartments are included in the heat-insulating main body 70. Specifically, the refrigerator 100 includes a refrigerating compartment 10, a temperature-switchable compartment 20 which allows variable temperature settings, and a freezer compartment 30. The rectangles drawn in dashed lines in Fig. 1 indicate openings of the respective storage compartments.

The refrigerating compartment 10 is an example of a first storage compartment of the refrigerator according to the present invention, and the temperature-switchable compartment 20 is an example of a second storage compartment of the refrigerator according to the present invention.

At the opening of each of the storage compartments, a heat-insulating door filled with a foam heat-insulating material, such as urethane, is provided.

Specifically, a first door 11, which is a single swing door, is provided so as to seal the openings of the refrigerating compartment 10 and the temperature-switchable compartment 20 in a manner which allows opening and closing. The first door 11 is an example of the doors of the refrigerator according to the present invention, and swings on a swing axis provided at an right end of the first door 11 viewed from the front of the refrigerator according to the present invention. In addition, the freezer compartment 30 is provided with a second door 31. The second door 31 is a drawer-type door.

In such a basic configuration, the refrigerator 100 according to Embodiment 1, the refrigerating compartment 10 is cooled using a direct cooling method, and the temperature-switchable compartment 20 and the freezer compartment 30 are cooled using an indirect cooling method.

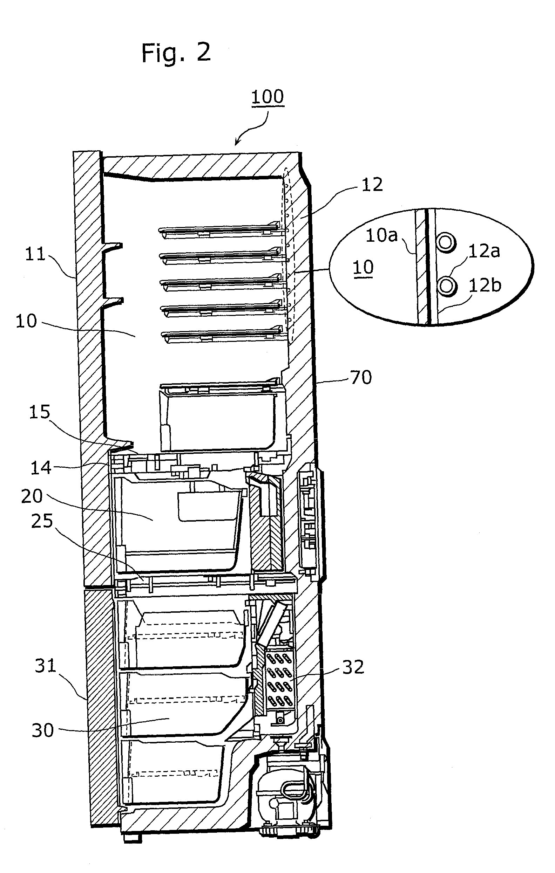

Fig. 2 is a longitudinal sectional view of a refrigerator 100 according to Embodiment 1.

As shown in Fig. 2, in the heat-insulating main body 70, the refrigerating compartment 10 and the temperature-switchable compartment 20 are divided by an upper divider 15. In addition, the temperature-switchable compartment 20 and the freezer compartment 30 are divided by a lower divider 25.

Air convection between the opening of the refrigerating compartment 10 and the opening of the temperature-switchable compartment 20 is prevented by a divider seal member 14 provided on the first door 11.

The refrigerator 100 includes two coolers. Specifically, a first cooler 12 is provided on a back surface of a back wall 10a of the refrigerating compartment 10. The back wall 10a of the refrigerating compartment 10 is cooled by thermal conduction from the first cooler 12. Air in the refrigerating compartment 10 is cooled by the cooled back wall 10a.

The first cooler 12 includes a cooling pipe 12a and a metal plate 12b. The back wall 10a of the refrigerating compartment 10 is directly cooled by the metal plate 12b on the back surface of the back wall 10a.

The refrigerator 100 has a second cooler 32 behind a back wall of the freezer compartment 30. The inside of the freezer compartment 30 is cooled by circulating cool air which is emitted by the second cooler 32.

The cool air emitted from the second cooler 32 is provided also to the temperature-switchable compartment 20. The temperature range of the temperature-switchable compartment 20 is maintained between, for example, the temperature range of the refrigerating compartment 10 and the temperature range of the freezer compartment 30 by controlling opening and closing of a damper.

As described above, the refrigerator 100 according to Embodiment 1 includes the refrigerating compartment 10 cooled using the direct cooling method and the temperature-switchable compartment 20 and the freezer compartment 30 cooled using the indirect cooling method.

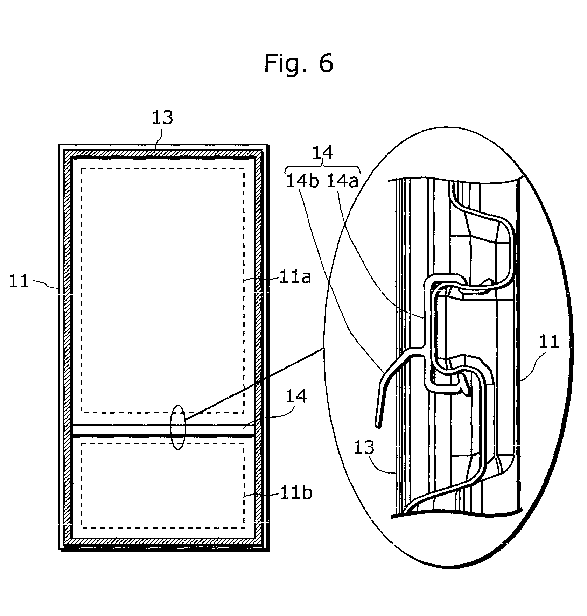

In other words, the refrigerator 100 according to Embodiment 1 includes the three storage compartments aligned vertically as in the conventional refrigerator shown in Fig. 6. However, the refrigerator 100 according to Embodiment 1 has the only two doors which seal the openings of the storage compartments in a manner which allows opening and closing.

Specifically, the openings of the refrigerating compartment 10 and the temperature-switchable compartment 20 are sealed by a single door, that is, the first door 11 in a manner which allows opening and closing. On the other hand, the opening of the freezer compartment 30 is sealed by a single door, that is, the second door 31 in a manner which allows opening and closing.

In the refrigerator 100 according to Embodiment 1, a single door, that is, the first door 11 is assigned to the refrigerating compartment 10 and the temperature-switchable compartment 20, and air convection between the opening of the refrigerating compartment 10 and the opening of the temperature-switchable compartment 20 is effectively prevented so that the refrigerator 100 consumes less energy.

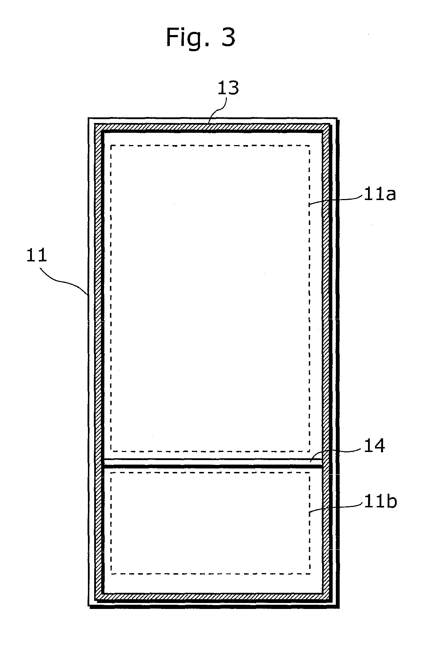

Fig. 3 shows a configuration of seal members attached to the first door 11 according to Embodiment 1.

It is to be noted that Fig. 3 shows an overview of a compartment-side surface (back surface) of the first door 11. In order to clearly show characteristics of the present invention, details such as door pockets normally provided on the back surface of the first door 11 are not shown in Fig. 3.

As shown in Fig. 3, the first door 11 is provided with a seal member 13, which is a gasket including a magnet to keep the refrigerating compartment 10 and the temperature-switchable compartment 20 airtight.

Specifically, on the back surface of the first door 11, there are a refrigerating compartment region 11a and a temperature-switchable compartment region 11b which correspond to the opening of the refrigerating compartment 10 and the opening of the temperature-switchable compartment 20, respectively. The seal member 13 is disposed in a manner such that the seal member 13 surrounds both the refrigerating compartment region 11a and the temperature-switchable compartment region 11b.

In addition, a divider seal member 14 is provided between the refrigerating compartment region 11a and the temperature-switchable compartment region 11b so as to block upward and downward airflows in a space between the first door 11 and the front end face of the upper divider 15.

In other words, the divider seal member 14 on the back surface of the first door 11 laterally extends at the position facing the front end face of the upper divider 15. In this configuration, the divider seal member 14 is transversely pressed against the front end face of the upper divider 15 when the first door 11 is closed, so that air convection between the opening of the refrigerating compartment 10 and the opening of the temperature-switchable compartment 20 is prevented.

Here, in the case where the door of the refrigerating compartment 10 and the door of the temperature-switchable compartment 20 are separate as in the conventional refrigerators, one seal member is necessary for surrounding the refrigerating compartment region 11a and another for surrounding the temperature-switchable compartment region 11b. That is, the total length of the seal members is longer than the total length of the seal member 13 shown in Fig. 3.

In other words, the total length across which the seal member keeps the two storage compartments of the refrigerator 100 airtight is constantly exposed to ambient air is shorter than that of the conventional refrigerators.

As a result, energy loss due to thermal conduction through the seal member is smaller than in the conventional refrigerators, and thus the refrigerator 100 consumes less energy.

In addition, because the opening of the refrigerating compartment 10 and the opening of the temperature-switchable compartment 20 are sealed by the single door of the first door 11, the front end face of the upper divider 15 dividing the refrigerating compartment 10 and the temperature-switchable compartment 20 from each other is exposed to ambient air only when the first door 11 is open.

Moreover, the temperature range of the temperature-switchable compartment 20 is higher than the temperature range of the freezer compartment 30, and relatively close to the temperature range of the refrigerating compartment 10.

That is, the front end face of the upper divider 15 is in contact with cool air of the refrigerating compartment 10 and the temperature-switchable compartment 20, temperature ranges of which are close to each other, for most of the time, and thus air around the front end face of the upper divider 15 is kept at low humidity. Therefore, the amount of dew condensation on the front end face of the upper divider 15 is not so large as to be a problem.

It is thus unnecessary to provide the radiator pipe 40, which is provided in a radiation part of the cooling cycle, behind the front end face of the upper divider 15.

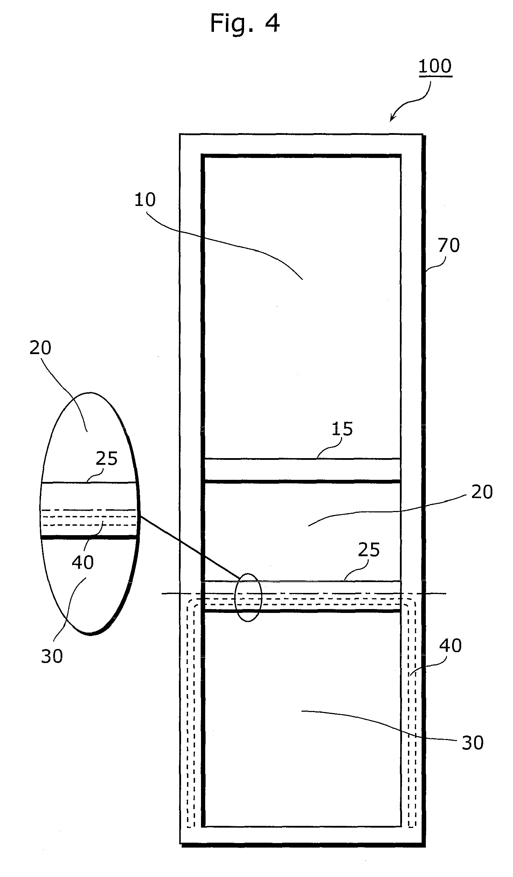

Fig. 4 shows a configuration of the radiator pipe 40 of the refrigerator 100 according to Embodiment 1.

As shown in Fig. 4, the radiator pipe 40 provided in the radiation part of the cooling cycle extends upward outside one of the side walls of the freezer compartment 30, laterally penetrates the lower divider 25 so as to run behind the front end face of the lower divider 25 and so as not to run in the upper divider 15, and extending downward outside the other one of the side walls of the freezer compartment 30.

That is, the total length of the radiator pipe 40 is shorter than is the case where the radiator pipe 40 runs in the upper divider 15. In this configuration, for example, costs of manufacturing the radiator pipe 40 are reduced.

In addition, thermal effusion through the front end face of the upper divider 15 into the refrigerating compartment 10 and the temperature-switchable compartment 20 is prevented. That is, energy loss due to heat radiation from the radiator pipe 40 is reduced.

In addition, as shown in Fig. 4, the radiator pipe 40 in the lower divider 25 is disposed at a level closer to the freezer compartment 30. Specifically, the radiator pipe 40 is disposed below a center line (indicated by an alternate long and short dash line in Fig. 4) of the front end face of the lower divider 25.

Here, the difference in temperature is larger between ambient air and the freezer compartment 30 than between the ambient air and the temperature-switchable compartment 20, and thus dew condensation is likely to occur at an upper part of the perimeter of the opening of the freezer compartment 30. Therefore, in the configuration where the radiator pipe 40 is disposed closer to the freezer compartment 30 as shown in Fig. 4, dew condensation is efficiently prevented in the part where dew condensation is likely to occur.

In addition, it is unnecessary for the front end face of the upper divider 15 to be in close contact with the seal member 13, which is a gasket including a magnet. That is, the front end face of the upper divider 15 does not need to be a metal component. Therefore, the front end face of the upper divider 15 may be made of resin. Alternatively, a resin facing panel 17 may be attached on the front end face of the upper divider 15.

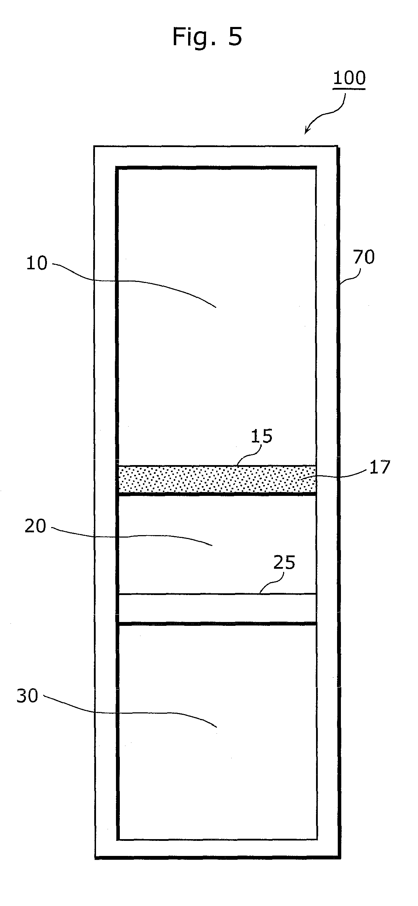

Fig. 5 shows that the front end face of the upper divider 15 according to Embodiment 1 is made of resin.

As shown in Fig. 5, a resin facing panel 17 is attached on the front end face of the upper divider 15. In other words, the front end face of the upper divider 15 is made of resin, which is material having low thermal conductivity.

In this configuration, the thermal conduction from the inside of the refrigerating compartment 10 and the temperature-switchable compartment 20 to the front end face is reduced, and thus possibility of the dew condensation on the front end face of the upper divider 15 is further reduced.

As described above, the refrigerator 100 according to Embodiment 1 includes the refrigerating compartment 10 cooled using the direct cooling method and the temperature-switchable compartment 20 and the freezer compartment 30 cooled using the indirect cooling method. In addition, the refrigerator 100 according to Embodiment 1 has the single door of the first door 11 for the refrigerating compartment 10 and the temperature-switchable compartment 20, and the single door of the second door 31 for the freezer compartment 30.

In this configuration, the length across which the seal member keeps the storage compartments airtight is constantly exposed to ambient air is shorter than that of the conventional refrigerator in which each of the three storage compartments is provided with a door.

As a result, energy loss due to thermal conduction through the seal member is smaller than in the conventional refrigerators, and thus the refrigerator 100 consumes less energy.

In addition, this eliminates the need for the radiator pipe 40 behind the front end face of the upper divider 15 dividing the refrigerating compartment 10 and the temperature-switchable compartment 20 from each other, and thus the total length of the radiator pipe 40 is shorter and energy loss due to heat radiation from the radiator pipe 40 is reduced.

In addition, the front end face of the upper divider 15 may be made of resin because the seal member 13, which is a gasket including a magnet, does not need to be in close contact with the front end face of the upper divider 15. With this, possibility of dew condensation on the front end face of the upper divider 15 is further reduced.

The present invention thus provides the refrigerator 100 which includes the refrigerating compartment 10 cooled using the direct cooling method and the temperature-switchable compartment 20 and the freezer compartment 30 cooled using the indirect cooling method with less energy consumption.

### [Embodiment 2]

A front view and a longitudinal sectional view of a refrigerator 100 according to Embodiment 2 of the present invention are the same as the front view and the longitudinal sectional view of the refrigerator 100 according to Embodiment 1 shown in Fig. 1 and Fig. 2, and thus descriptions thereof are omitted.

Fig. 6 shows a configuration of seal members attached to a first door 11 according to Embodiment 2.

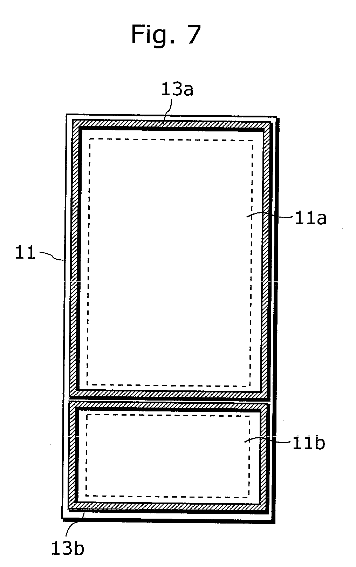

It is to be noted that Fig. 6 shows an overview of a compartment-side surface (back surface) of the first door 11. In order to clearly show characteristics of the present invention, details such as door pockets normally provided on the back surface of the first door 11 are not shown in the Fig. 6. They are not shown in Fig. 7 to Fig. 9 below for the same purpose, either.

As shown in Fig. 6, the first door 11 is provided with a seal member 13, which is a gasket including a magnet to keep the refrigerating compartment 10 and the temperature-switchable compartment 20 airtight.

Specifically, on the back surface of the first door 11, there are a refrigerating compartment region 11a and a temperature-switchable compartment region 11b which correspond to the opening of the refrigerating compartment 10 and the opening of the temperature-switchable compartment 20, respectively. The seal member 13 is disposed is a manner such that the seal member 13 surrounds both the refrigerating compartment region 11a and the temperature-switchable compartment region 11b.

In addition, a divider seal member 14 is provided between the refrigerating compartment region 11a and the temperature-switchable compartment region 11b so as to block upward and downward airflows in a space between the first door 11 and a front end face of the upper divider 15.

Specifically, the divider seal member 14 includes an attachment portion 14a for attaching the divider seal member 14 to the first door 11, and a fin portion 14b to be pressed against the front end face of the upper divider 15. The fin portion 14b is an example of a tongue of the refrigerator according to the present invention.

As shown in Fig. 6, the divider seal member 14 on the back surface of the first door 11 laterally extends at a position facing the front end face of the upper divider 15. Similarly, the fin portion 14b laterally extends in the same manner.

In addition, the fin portion 14b is an elastic platy member fixed at one of the ends, and thus covering a relatively large area of the front end face of the upper divider 15.

With the divider seal member 14 in this configuration, the fin portion 14b of the divider seal member 14 is transversely pressed against the front end face of the upper divider 15 across the width thereof when the first door 11 is closed. Air convection between the opening of the refrigerating compartment 10 and the opening of the temperature-switchable compartment 20 is thereby prevented.

As a result, power is not wasted when the refrigerating compartment 10 and the temperature-switchable compartment 20 are kept in different temperature ranges.

In addition, since the fin portion 14b covers a relatively large area of the front end face of the upper divider 15, dew condensation on the front end face of the upper divider 15 is effectively prevented.

Here, in the case where the door of the refrigerating compartment 10 and the door of the temperature-switchable compartment 20 are separate as in the conventional refrigerators, one seal member is necessary for surrounding the refrigerating compartment region 11a and another for surrounding the temperature-switchable compartment region 11b. That is, the total length of the seal members is longer than that of the seal member 13 shown in Fig. 6.

In other words, the total length across which the seal member keeps the two storage compartments of the refrigerator 100 airtight is constantly exposed to ambient air is shorter than that of the conventional refrigerators.

As a result, energy loss due to thermal conduction through the seal member is smaller than in the conventional refrigerators, and thus the refrigerator 100 consumes less energy.

It is to be noted that although the divider seal member 14 shown in Fig. 6 has a single fin, the divider seal member 14 according to Embodiment 2 may have two fins in rows.

Alternatively, a gasket for keeping the refrigerating compartment 10 airtight and a gasket for keeping the temperature-switchable compartment 20 airtight may be separately provided, and air convection between the opening of the refrigerating compartment 10 and the opening of the temperature-switchable compartment 20 may be prevented by the these gaskets in the portions facing the front end face of the upper divider 15.

Fig. 7 shows an overview of the first door 11 on which two gaskets are disposed correspondingly to the refrigerating compartment 10 and the temperature-switchable compartment 20.

On the first door 11 shown in Fig. 7, a first gasket 13a surrounding the refrigerating compartment region 11a and a second gasket 13b surrounding the temperature-switchable compartment region 11b are disposed.

In this case, the total length of the seal members (gaskets) for keeping the refrigerating compartment 10 and the temperature-switchable compartment 20 airtight is the same as that of the gaskets of doors separately provided for the refrigerating compartment 10 and the temperature-switchable compartment 20.

However, in the case where the first gasket 13a and the second gasket 13b are provided on the single door of the first door 11, the first gasket 13a and the second gasket 13b are covered with the first door 11 even over the potions facing the front end face of the upper divider 15. That is, the portions are not exposed when the first door 11 is closed.

On the other hand, in the case where the refrigerating compartment 10 and the temperature-switchable compartment 20 are provided with separate doors and a gasket is disposed on each of the doors, the corresponding portions of the gaskets are constantly exposed to ambient air flowing between the doors.

As a result, even though the first gasket 13a and the second gasket 13b are disposed on the first door 11 as shown in Fig. 7, energy loss due to thermal conduction through the seal members is smaller than in the conventional refrigerators, and thus the refrigerator 100 consumes less energy.

In the case where the first gasket 13a and the second gasket 13b are disposed on the first door 11 as shown in Fig. 7, the first gasket 13a and the second gasket 13b serve as the divider seal member of the refrigerator according to the present invention with the portions facing the front end face of the upper divider 15.

Alternatively, air convection between the opening of the refrigerating compartment 10 and the opening of the temperature-switchable compartment 20 may be prevented by a seal member other than the divider seal member 14 shown in Fig. 7.

For example, a member which has the same structure as the seal member 13 including a magnet and keeps the refrigerating compartment 10 and the temperature-switchable compartment 20 airtight may be disposed there instead of the divider seal member 14.

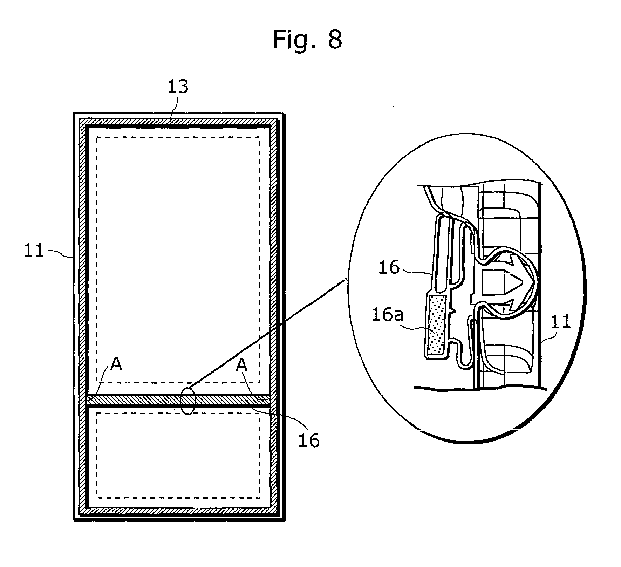

Fig. 8 shows an overview of the first door 11 which has a gasket 16 disposed at a position facing the front end face of the upper divider 15. The gasket 16 includes a magnet.

As shown in Fig. 8, the gasket 16 includes a magnet 16a. In this case, the front end face of the upper divider 15 is made of a steel plate. In this configuration, the front end face of the upper divider 15 and the gasket 16 actively come into close contact with each other by magnetic force of the magnet 16a.

In the case where the gasket 16 is disposed as shown in Fig. 8, the gasket 16 and the seal member 13 are joined in a joining area A by welding.

Alternatively, the gasket 16 and the seal member 13 do not need to be welded to each other when leakage of cool air in the joining area A is acceptable from an energy saving viewpoint. For example, the gasket 16 and the seal member 13 may be pressed against each other by elasticity thereof.

In this manner, the seal member which prevents air convection between the opening of the refrigerating compartment 10 and the opening of the temperature-switchable compartment 20 may have a different shape and different properties from those of the above described divider seal member 14.

In the above configuration, the seal member 13 and the gasket 16 are each a gasket including a magnet. However, the magnet may be provided only in part of the seal member 13 or the gasket 16.

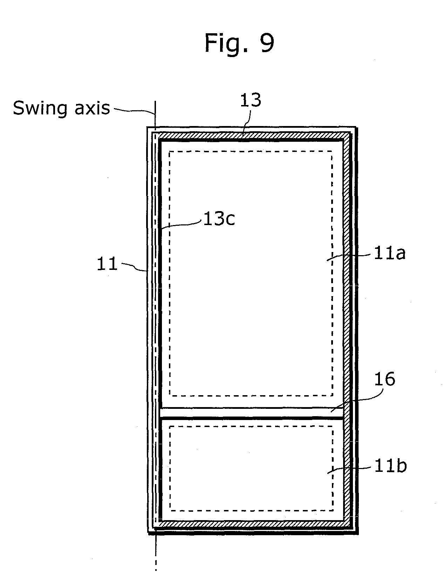

Fig. 9 shows an exemplary configuration of a gasket which has a magnet only in part on the first door 11.

In Fig. 9, the diagonally shaded area of the seal member 13 indicates a portion where a magnet is present, and the plain area indicates a portion where no magnet is present.

As shown in Fig. 9, in the seal member 13, the portion extending along the edge on the swing axis of the first door 11 lies at no or a very short distance from the swing axis. Accordingly, magnetic force in the portion scarcely creates a moment to swing the first door 11 in a closing direction. A magnet in the portion of the seal member 13 is therefore unnecessary.

The same holds true for the case where the divider seal member 14 is disposed instead of the gasket 16, at the position facing the front end face of the upper divider 15 of the first door 11.

When the first door 11 is closed, the gasket 16 comes into close contact with the front end face of the upper divider 15 due to the elasticity of the gasket 16. Thus, the gasket 16 does not need to include a magnet.

In this manner, a magnet does not need to be provided in a portion of the seal member 13 of the refrigerator 100. Similarly, the gasket 16 does not need to include a magnet.

In this case, there is an advantageous effect that, for example, costs of manufacturing the seal members which keep the storage compartments of the refrigerator 100 airtight are reduced in total.

As described above, the refrigerator 100 according to Embodiment 2 includes the refrigerating compartment 10 cooled using the direct cooling method and the temperature-switchable compartment 20 and the freezer compartment 30 cooled using the indirect cooling method. Furthermore, the refrigerator 100 according to Embodiment 2 has the single door of the first door 11 for the refrigerating compartment 10 and the temperature-switchable compartment 20, and the single door of the second door 31 for the freezer compartment 30.

In this configuration, the length across which the seal members keep the storage compartments with airtight is constantly exposed to ambient air is shorter than that of the conventional refrigerators in which each of the three storage compartments is provided with a door.

As a result, energy loss due to thermal conduction through the seal members is small in comparison with the conventional refrigerators, and thus the refrigerator 100 consumes less energy.

In addition, the divider seal member 14 disposed on the first door 11 prevents air convection between the opening of the refrigerating compartment 10 and the opening of the temperature-switchable compartment 20. Power is thereby not wasted when the refrigerating compartment 10 and the temperature-switchable compartment 20 are kept in different temperature ranges.

In addition, the divider seal member 14 is disposed on the first door 11 in a manner such that the divider seal member 14 abuts against the front end face of the upper divider 15 at its position closer to the refrigerating compartment 10, which is likely to have higher humidity than the temperature-switchable compartment 20. In this configuration, dew condensation on the front end face of the upper divider 15 is effectively prevented.

In addition, when the first door 11 is closed, the fin portion 14b of the divider seal member 14 is pressed against the front end face of the upper divider 15 so as to cover the front end face of upper divider 15 in a relatively large area.

In this configuration, not only the air convection but also dew condensation on the front end face of the upper divider 15 is effectively prevented.

Although the refrigerator according to the present invention is described in the above embodiments, the present invention is not limited to them.

In other words, the embodiments disclosed herein are exemplary in all respects and should never be considered limiting. The scope of the present invention is indicated not by the description above but by the claims, and is intended to include any modification within the scope and the sense of equivalents of the claims.

The present invention also includes any embodiments in which the components in the above embodiments are used in any combination unless they depart from the spirit and scope of the present invention.

### [Industrial Applicability]

The present invention provides a refrigerator which includes a storage compartment cooled using the direct cooling method and a storage compartment cooled using the indirect cooling method with less energy consumption. The present invention is therefore applicable as refrigerators of various types and sizes, such as household-use refrigerators and commercial-use refrigerators.

### [Reference Signs List]

- 10: Refrigerating compartment
- 10a: Back walls
- 11: First door
- 11a: Refrigerating compartment region
- 11b: Temperature-switchable compartment region
- 12: First cooler
- 12a: Cooling pipe
- 12b: Metal plate
- 13: Seal member
- 13a: First gasket
- 13b: Second gasket
- 14: Divider seal member
- 14a: Attachment portion
- 14b: Fin portion
- 15: Upper divider
- 16: Gasket
- 16a: Magnet
- 17: Facing panel
- 20: Temperature-switchable compartment region
- 25: Lower divider
- 30: Freezer compartment
- 31: Second door
- 32: Second cooler
- 40: Radiator pipe
- 70: Heat-insulating main body
- 71: Inner case
- 72: Outer case
- 73: Foam heat-insulating material
- 100: Refrigerator

## Claims

1. A refrigerator including a first cooler and a second cooler, said refrigerator comprising:
a first storage compartment having an opening at a front face and an inside which is cooled by a wall cooled by the first cooler;
a second storage compartment having an opening at a front face and an inside which is cooled by circulating cool air cooled by the second cooler; and
a single first door which seals the opening of said first storage compartment and the opening of said second storage compartment in a manner which allows opening and closing.

2. The refrigerator according to Claim 1,
wherein said second storage compartment is disposed below said first storage compartment, and
said refrigerator further comprises:
a freezer compartment disposed below said second storage compartment and having an opening at a front face and an inside which is cooled by circulating cool air cooled by the second cooler; and
a single second door which seals the opening of said freezer compartment in a manner which allows opening and closing.

3. The refrigerator according to Claim 2,
wherein said first storage compartment and said second storage compartment are divided by an upper divider,
said second storage compartment and said freezer compartment are divided by a lower divider,
said refrigerator further comprises
a radiator pipe provided in a radiation part of a cooling cycle, extending upward outside one of side walls of said freezer compartment, laterally penetrating said lower divider so as to lie behind a front end face of said lower divider and so as not to run in said upper divider, and extending downward outside an other one of the side walls of said freezer compartment, and
said first storage compartment is a refrigerating compartment and a temperature range of said second storage compartment is higher than a temperature range of said freezer compartment.

4. The refrigerator according to Claim 3,
wherein said radiator pipe in said lower divider is disposed at a level closer to said freezer compartment.

5. The refrigerator according to one of Claim 3 and Claim 4, wherein the front end face of said upper divider is made of resin.

6. A refrigerator including: a heat-insulating main body including an outer case, an inner case, and heat-insulating material provided between the outer case and the inner case; a first cooler; and a second cooler, said refrigerator comprising:
a first storage compartment provided inside the heat-insulating main body, and having an opening at a front face and an inside which is cooled by a wall cooled by the first cooler;
a second storage compartment provided inside the heat-insulating main body and having an opening at a front face and an inside which is cooled by circulating cool air cooled by the second cooler circulates;
a divider which defines said first storage compartment and said second storage compartment by dividing a space inside the heat-insulating main body into an upper space and a lower space;
a single door which seals the opening of said first storage compartment and the opening of said second storage compartment in a manner which allows opening and closing; and
a divider seal member disposed on a compartment-side surface of said door and laterally extending at a position facing a front end face of said divider so as to block upward and downward airflows in a space between the front end face of said divider and said door.

7. The refrigerator according to Claim 6,
wherein said divider seal member is disposed on said door, at a position facing the front end face of said divider and closer to said first storage compartment.

8. The refrigerator according to Claim 6 or Claim 7,
wherein said divider seal member is disposed on said door, laterally extends at the position facing the front end face of said divider, and has a tongue which is pressed against the front end face when said door is closed.

9. The refrigerator according to one of Claim 6 and Claim 7, comprising:
a first gasket which is disposed on a compartment-side surface of said door, at a position corresponding to a perimeter of the opening of said first storage compartment, and keeps said first storage compartment airtight; and
a second gasket which is disposed on the compartment-side surface of said door, at a position corresponding to a perimeter of the opening of said second storage compartment, and keeps said second storage compartment airtight,
wherein said divider seal member includes a portion of said first gasket and a portion of said second gasket, the portions facing the front end face of said divider.
